# EUROPÄISCHE PATENTSCHRIFT

(11) **EP 1 874 122 B1**
(45) Veröffentlichungstag und Bekanntmachung des Hinweises auf die Patenterteilung: **02.12.2009**
(21) Anmeldenummer: 06723373.4
(22) Anmeldetag: 11.03.2006
(51) Int. Cl.: A22C 11/02

(54) **VORRICHTUNG ZUM BEFÜLLEN VON VERPACKUNGSHÜLLEN MIT EINEM FÜLLGUT**
DEVICE FOR FILLING PACKING WRAPPERS WITH STUFFING
DISPOSITIF POUR REMPLIR DES ENVELOPPES D'EMBALLAGE AU MOYEN D'UNE MATIERE DE REMPLISSAGE

(30) Priorität: 19.03.2005 DE 102005012780
(43) Veröffentlichungstag der Anmeldung: 09.01.2008
(73) Patentinhaber: Kalle GmbH, 65203 Wiesbaden (DE)
(72) Erfinder: AUF DER HEIDE, Christian, 49080 Osnabrück (DE); AUF DER HEIDE, Dirk, 49594 Alfhausen (DE); KALLWEIT, Jürg-Heinrich, 49076 Osnabrück (DE)
(74) Vertreter: Zounek, Nikolai
(86) Internationale Anmeldenummer: PCT/EP2006/002261
(87) Internationale Veröffentlichungsnummer: WO 2006/099956

(56) Entgegenhaltungen:
- EP-A- 0 379 993
- EP-A- 0 391 490
- EP-A- 0 455 050
- DE-A1- 4 223 128
- US-A- 4 547 931
- US-A- 4 847 951

## Beschreibung

Die Erfindung betrifft eine Vorrichtung zum Befüllen von Verpackungshüllen mit einem Füllgut und anschließendem abschnittsweisem Verschließen der Verpackungshüllen, mit einer Füllmaschine, die auf einer Drehplatte mindestens ein schwenkbares Füllrohr aufweist, auf das eine zu einer Raupe geraffte Verpackungshülle aufziehbar ist, einer Verschließeinrichtung zum abschnittsweisen Verschließen der gefüllten Verpackungshülle und mit einem Magazin, in dem geraffte Verpackungshüllen gespeichert sind.

Es ist seit langem bekannt, pastöses Füllgut wie Wurstbrät oder Käse, in schlauchförmige Verpackungshüllen zu füllen. Zum Füllen und Verschließen der Verpackungshüllen werden Füllmaschinen eingesetzt, die mit einer Verschließeinrichtung zusammenarbeiten. Derartige Füllmaschinen und Verschließeinrichtungen sind bekannt. Die Füllmaschinen besitzen in der Regel eine Drehplatte oder Revolverplatte, die verschwenkbar ist, und auf der ein, zwei oder mehrere Füllrohre angeordnet sind, von denen ein Füllrohr in eine Position geschwenkt ist, in der eine Verpackungshülle auf das Füllrohr so aufgezogen ist, dass das Ende der Verpackungshülle sich vor der Mündung des Füllrohres befindet. Die schlauchförmigen Verpackungshüllen sind im allgemeinen formstabile Raupen großer Schlauchlänge von 10 bis 200 m, die zu Raupen mit einer Länge von 10 bis 100 cm zusammengefaltet sind. Nahe der Mündung des Füllrohres ist dieses von einer Außenbremse umgeben, die dem Abziehen der Verpackungshülle von dem Füllrohr während des Befüllvorganges entgegenwirkt, in dem die Verpackungshülle mit einer einstellbaren Kraft auf die Mantelfläche des Füllrohres gedrückt wird.

Aus der EP 0 962 143 B1 oder EP-A-0 379 993 ist eine Vorrichtung zum Herstellen von mit Füllgut befüllten Verpackungen, insbesondere von Würsten, durch Befüllen und anschließendes Verschließen schlauch- oder beutelförmiger Wursthüllen bekannt. Die Vorrichtung umfasst eine Füllmaschine, die mindestens ein Füllrohr mit einer Mündung aufweist, auf das Wursthüllen aufgezogen werden und durch das Füllgut geleitet werden kann, um die Wursthüllen zu befüllen. Eine Verschließmaschine zum Verschließen befüllter Wursthüllen oder Wursthüllenabschnitte ist bezogen auf den Füllgutstrom im Füllrohrstrom ab der Mündung des Füllrohres angeordnet. Des Weiteren umfasst die Vorrichtung einen Resthüllenentferner zum Entfernen des unbefüllten Restes einer Wursthülle aus der Füll- und/oder der Verschließmaschine. Des Weiteren sind ein Magazin für unbefüllte Wursthüllen und Mittel zum Entnehmen einer unbefüllten Wursthülle aus dem Magazin zum Aufziehen derselben auf das Füllrohr vorhanden. Zwischen der Füllmaschine und der Verschließmaschine ist eine Daten- oder Signalleitung zur Übernahme von Betriebsparametern vorgesehen. Die bekannte Vorrichtung zeichnet sich des Weiteren durch eine Überwachungseinrichtung aus, mit der mindestens ein Parameter einer hergestellten Verpackung wie deren Gewicht oder deren Prallheit erfasst werden kann und durch mindestens eine Steuereinrichtung, die an die Überwachungseinrichtung sowie die Füll- und/oder die Verschließmaschine angeschlossen und so ausgeführt ist, dass im Fall einer Abweichung eines oder mehrerer der von der Überwachungseinrichtung erfassten Parameter von entsprechenden Sollwerten eine Verränderung eines oder mehrerer Betriebsparameter der Füll- und/oder Verschließmaschine bewirkt oder diese abschaltet.

Die Magaziniervorrichtungen weisen Magazine auf, des Weiteren eine Abgabevorrichtung für Wursthüllen, Mittel zur Aufnahme einer Wursthülle an der Übergabeposition, Mittel zum Entnehmen der Wursthülle aus dem Magazin und Mittel zum Abgeben der Wursthülle an eine Abgabeposition. Die Abgabevorrichtung besteht aus einer Greifer, der in einer parallel zu den Aufnahmen für die unbefüllten Wursthüllen verlaufenden Richtung längsverschiebbar ist und zusätzlich quer zu dieser Richtung schwenkbar ist. Des Weiteren ist ein separat ansteuerbarer Antrieb zum Öffnen und Schließen des Greifers, zum Längsverschieben und zum Verschwenken des Greifers vorgesehen. Die drei Antriebe des Greifers sind so angeordnet, dass der Antrieb zum Verschwenken des Greifers die beiden übrigen Antriebe mit bewegt und dass der Antrieb zum Längsverschieben des Greifers den Antrieb zum Öffnen und Schließen des Greifers mit bewegt.

Die DE 30 19 981 C2 betrifft eine Magazinvorrichtung für Wursthüllen an einer Wurstfüllmaschine, mit einem Speicherbehälter zur Aufnahme mehrerer Lagen von in ihrer Längsrichtung ziehharmonikaartig zusammengefalteten Wursthüllen, mit Ausgabemitteln zum Ausgeben und Aufziehmitteln zum selbsttätigen Ausziehen einer Wursthülle auf ein Stopfrohr für eine plastisch velformbare Masse wie Wurstbrät oder Käse. Es sind Fördermittel zum langsamen Vorschieben der untersten Lage Wursthülle über eine einem Vielfachen ihres Durchmessers entsprechende Strecke am Boden des Speicherbehälters quer zu ihrer Länge nach einer Entnahmestelle hin angebracht. Ferner sind Rückfördermittel zum Rückfördern von auf der untersten Lage aufliegenden weiteren Wursthüllen vorgesehen.

Der Boden des Speicherbehälters steigt in Förderrichtung des Förderers gegenüber der Horizontalen um einen Neigungswinkel an, der wenigstens gleich ist einem das selbsttätige Zurückrollen der oberen Wursthülle zulassenden Schüttwinkel. Zwischen dem Boden des Speicherbehälters und der Entnahmestelle ist ein nach unten geneigter Führungsschacht angeordnet, dessen Bodenteil eine Schiebführung zum Aufschieben der untersten Wursthülle auf das Stopfrohr bildet. Die Fördermittel weisen eine gleichförmig umlaufende endlose Förderschleife mit über dem Speicherboden geführten Mitnehmern auf.

Die bekannten Magazinvorrichtungen arbeiten bei formstabilen Verpackungshüllen aus Kunststoff zufriedenstellend, was jedoch nur durch hohen technischen Aufwand wie beispielsweise drei Antrieben für eine Greifervorrichtung für die Verpackungshüllen erreicht wird. Dabei ist bei einer bekannten Vorrichtung das Magazin verstellbar und kann exakt zu einem benachbarten Füllrohr der Füllmaschine ausgerichtet werden. Aufgrund des hohen technischen Aufwandes kann es leicht zu Betriebsstörungen kommen und bei einer Umrüstung der Vorrichtung auf andere Durchmesser und Längen der Verpackungshüllen müssen dann beispielsweise die Betriebsparameter der Antriebe für die Greifervorrichtung geändert werden, was zu einem entsprechenden Zeitaufwand führt.

Die Erfindung geht von der eingangs beschriebenen Vorrichtung aus und hat sich die Aufgabe gestellt, in einer Vorrichtung aus Füllmaschine, Verschließeinrichtung und Magazin zum vollautomatischen Befüllen von Verpackungshüllen, das Magazin und das Transportsystem vom Magazin zur Füllmaschine zu vereinfachen und somit betriebssicher und platzsparend zu gestalten.

Diese Aufgabe wird mittels der Vorrichtung gemäß Anspruch 1 gelöst.

In Ausgestaltung der Erfindung weist das Magazin trichterförmige Gestalt mit konisch zusammenlaufenden Seitenwänden auf und münden die Seitenwände in eine längliche spaltförmige Austrittsöffnung. Zweckmäßigerweise sind die Maße der Austrittsöffnung so dimensioniert, dass nur eine einzelne Raupe die Austrittsöffnung passieren kann. Neben den zwei konisch zusammenlaufenden Seitenwänden weist das Magazin zwei zueinander parallel verlaufende Wände, nämlich eine Rück- und Vorderwand auf, die einen dreiecksähnlichen Umriss besitzen.

In Weiterentwicklung der Erfindung weisen eine oder beide Seitenwände des Magazins je eine Längsklappe auf, die schwenkbar an den Seitenwänden angelenkt sind und den Abschlussteil der Seitenwände bilden. Das Drehgelenk der Längsklappe ist in Längsrichtung der Seitenwand ausgerichtet, so dass die Längsklappe in das Innere des trichterförmigen Magazins schwenkbar ist. Hierzu ist je ein Kipphebel außerhalb des Magazins nahe der Längsklappe angeordnet, der in seiner Kippstellung die Längsklappe in das Innere des Magazins verschwenkt. Jeder Kipphebel ist zweckmäßigerweise mit einer Steuereinrichtung verbunden und empfängt von dieser ein Steuersignal zum Verschwenken der Längsklappe, sobald ein Sensor das Raupenende der auf einem Füllrohr aufgezogenen Raupe detektiert.

Die einzelne Raupe tritt unter dem Einfluss der Schwerkraft aus der Austrittsöffnung aus und gelangt in eine Zufuhrbahn, die zwischen der Austrittsöffnung des Magazins und dem freien Ende desjenigen Füllrohrs verläuft, das sich in seiner übernahmeposition befindet, in der eine Raupe auf das Füllrohr aufgezogen wird.

Die weitere Ausgestaltung der Erfindung ergibt sich aus den Merkmalen der Patentansprüche 2 bis 13.

Im Folgenden wird die Erfindung anhand eines zeichnerisch dargestellten Ausfuhrungsbeispiels näher erläutert. Es zeigen:
- Fig. I: Eine schematische Seitenansicht der Vorrichtung nach der Erfindung,
- Fig. 3: eine schematische Schnittansicht durch ein mit gerafften Verpackungshüllen gefülltes Magazin mit geschlossener Längsldappe der Vorrichtung,
- Fig. 4: eine schematische Schnittansicht des Magazins nach Fig. 3 mit nach innen geschwenkter Längsklappe, und
- Fig. 4a: in perspektivischer Seitenansicht im Detail die Längsldappe in einer der Seitenwände des Magazins.

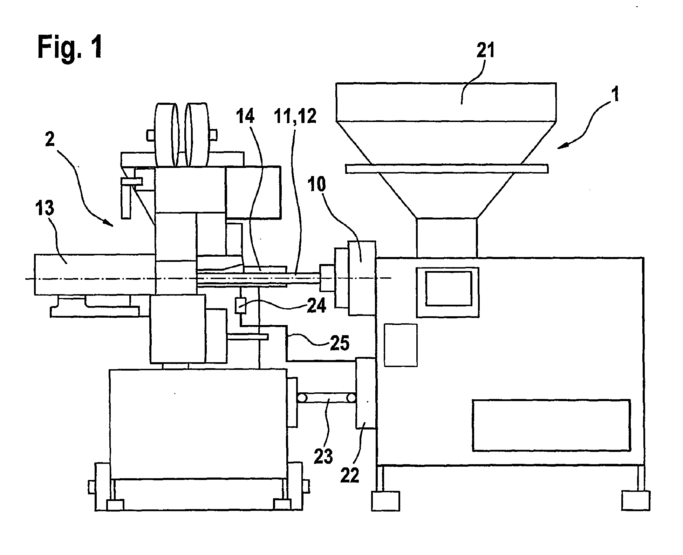

In Fig. 1 sind eine bekannte Füllmaschine 1 und eine bekannte Verschließeinrichtung 2 in Seitenansicht schematisch dargestellt, die zum Befüllen von Verpaclcungshüllen mit einem Füllgut, insbesondere von Wursthüllen mit Wurstbrät, und Abpacken der gefüllten Hüllen zusammenwirken. Das Füllgut ist in einem Fülltrichter 21 der Füllmaschine 1 enthalten und wird unter Druck mittels einer Füllpumpe einem in einer Abfüllposition befindlichen Füllrohr 11 bzw. 12 zugeführt. Die Füllmaschine 1 weist eine Druckplatte 10 auf, bei der es sich um eine Revolverplatte handelt, die mit mindestens einem Füllrohr, insbesondere zwei Füllrohren 11, 12 ausgerüstet ist und die um eine Drehachse verschwenkbar und in vorbestimmten Stellungen festsetzbar ist. Auf der Drehplatte 10 können auch mehr als zwei Füllrohre angeordnet sein.

Auf dem Füllrohr 12 ist eine zu einer Raupe 14 geraffte Verpackungshülle aufgezogen. Das Füllrohr 12 nimmt die Abfüllposition ein, in der es mit dem Austritt der nicht dargestellten Füllpumpe verbunden ist, die das Füllgut aus dem Fülltrichter 21 und durch das Füllrohr 12 in die Verpackungshülle drückt. Die Verpackungshüllen haben Längen von 10 bis 200 m und mehr und sind zu formstabilen Raupen 14 von 10 bis 100 cm Länge ziehharmonikaartig zusammengefaltet und auf das Füllrohr aufgeschoben. Die Verpackungshüllen sind eigenstabile/formstabile Raupen, die bevorzugt netzverpackt sind, aber auch ohne Netzverpackung bei geringeren Längen sein können. Die Netzverpackung wird zweckmäßiger Weise durch die Füllrohröffnung aufgestochen. Ebenso können Raffwaren mit einseitiger Öffnung, beispielsweise einem Raffring, eingesetzt werden.

Eine nicht gezeigte Hüllenaußenbremse hält in bekannter Weise die Verpackungshülle mit einstellbarer Kraft während des Füllvorgangs fest und wirkt dem durch den Fülldruck bedingten Abziehen der Verpackungshülle von dem Füllrohr entgegen. Bei dem Füllvorgang werden ständig weitere gefaltete Teile der Raupe 14 von dem Füllrohr abgezogen, gestreckt und mit Füllgut gefüllt. Sobald ein Abschnitt der Verpackungshülle ausreichend mit Füllgut befüllt ist, wird dieser Abschnitt durch die Verschließeinrichtung 2 verschlossen, die sich vor der Abfüllöffnung des Füllrohrs befindet. Die Verschließeinrichtung schnürt in bekannter Weise ein Ende des gefüllten Abschnitts ein und verschließt anschließend dieses Ende durch Setzen von zwei nebeneinander liegenden Clips bzw. Verschlussklammern. Die Einschnürung zwischen den beiden Verschlussklammern wird durchtrennt. Der befüllte und beidseitig verschlossene Abschnitt der Verpackungshülle, im Falle einer Wursthülle die beidseitig verschlossene Wurst, wird von der übrigen Verpackungshülle abgetrennt und durch eine Transporteinrichtung 13 aus der Verschließeinrichtung 2 abtransportiert.

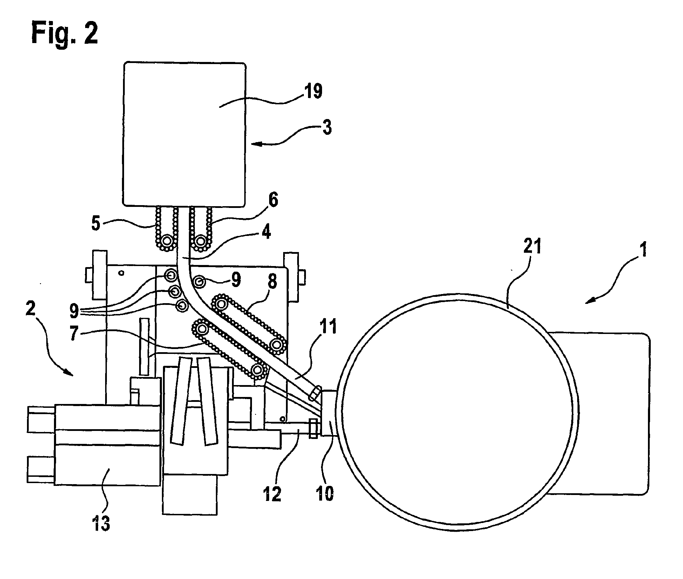

Das Befüllen und Verschließen der nächsten Raupe der Verpackungshülle kann dann beginnen. Sobald eine Verpackungshülle weitgehend befüllt und die einzelnen Abschnitte portioniert wurden, detektiert ein Sensor 24 das Ende der Verpackungshülle und sendet ein entsprechendes Signal über eine Signalleitung 25 an eine Steuereinrichtung 22, die einerseits ein Signal an eine Einrichtung zum Abstreifen des Endabschnitts der Verpackungshülle leitet und andererseits die Drehplatte 10 in eine neue Stellung verschwenkt, so dass eine frische, auf das weitere Füllrohr aufgezogene Verpackungshülle in seine Abfüllposition gebracht wird. Die Steuereinrichtung 22 verbindet über eine Datenleitung 23 die Verschließeinrichtung 2 mit der Füllmaschine 1 und ist des weiteren mit einem Magazin 3 in Verbindung (s. Fig. 2), in dem Raupen 14 gespeichert sind.

Nachdem der Endabschnitt der weitgehend abgefüllten Verpackungshülle von dem Füllrohr abgestreift ist, gelangt dieses infolge der Schwenkbewegung der Drehplatte 10 in eine Übernahmeposition, in der auf das Füllrohr eine frische, unbefüllte Verpackungshülle aufgezogen wird.

Füllmaschinen und Verschließeinrichtung sind im Stand der Technik vielfach bekannt und beschrieben und arbeiten weitgehend automatisiert zusammen.

Fig. 2 zeigt in Draufsicht das Magazin 3, die Füllmaschine 1 mit dem Fülltrichter 21, die Verschließeinrichtung 2 und Transporteinrichtungen 5, 6, 7, 8, Umlenkrollen 9 und eine Zufuhrbahn. 4 für den Transport der Raupen 14 von dem Magazin 3 zu dem in einer Übernahmeposition befindlichen Füllrohr 11 der Füllmaschine 1.

Wie schon erwähnt, ist ein erstes Füllrohr 12 der Füllmaschine 1 mit einer Raupe 14 bestückt, die an der Füllrohrspitze, d. h. der Abfüllöffnung des Füllrohrs arretiert ist. Dazu wurde das erste Stück der Raupe 14 durch Verdränger- und Clipscheren hindurchgeführt und die Verschließeinrichtung setzte eine erste Verschlussklemme. Insbesondere bereits einseitig geschlossene Raffwaren mit sogenannten Erstclips eignen sich an dieser Stelle für den vollautomatischen Betrieb. Danach ist die Füllmaschine bereit den Füllvorgang zu beginnen. Die einzelnen gefüllten Abschnitte bzw. Würste werden auf Füllkaliber und Füllgewicht kontrolliert und bei Bedarf werden die entsprechenden Parameter neu justiert. In der Übernahmeposition wird auf das zweite Füllrohr 11 eine frische Raupe 14 aufgeschoben. Aus Gründen der besseren Übersichtlichkeit sind die gefüllte Raupe auf dem Füllrohr 12 und die aufgezogene Raupe 14 auf dem Füllrohr 11 in Fig. 2 nicht dargestellt. Die Bestückung des in der Übernahmeposition befindlichen Füllrohres erfolgt vollautomatisch von dem Magazin 3 aus. Das Magazin 3 wird zu Beginn einer Produktionsschicht mit der notwendigen Anzahl von Raupen 14 gefüllt. Dabei können die Raupen 14 für unterschiedliche Produkte verwendet werden, d. h. die einzelnen Raupen können sich sowohl in der Länge als auch im Durchmesser voneinander unterscheiden. Jede Raupe ist mit einem Erstclip bzw. mit einer ersten Verschlussklemme ausgerüstet und die Füllrohre sind mit einer Außenbremse ausgerüstet, die nach dem Aufziehen der Raupe 14 auf das Füllrohr aktiviert wird. Der Befüllvorgang ist sofort durchführbar. Die automatische Füllkalibermessung, die optisch durchgeführt wird, wird durch Sollwertvorgaben der Außenbremse geregelt.

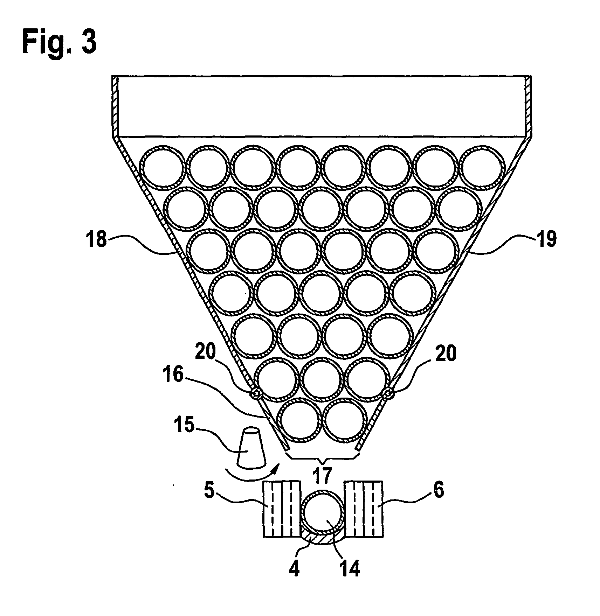

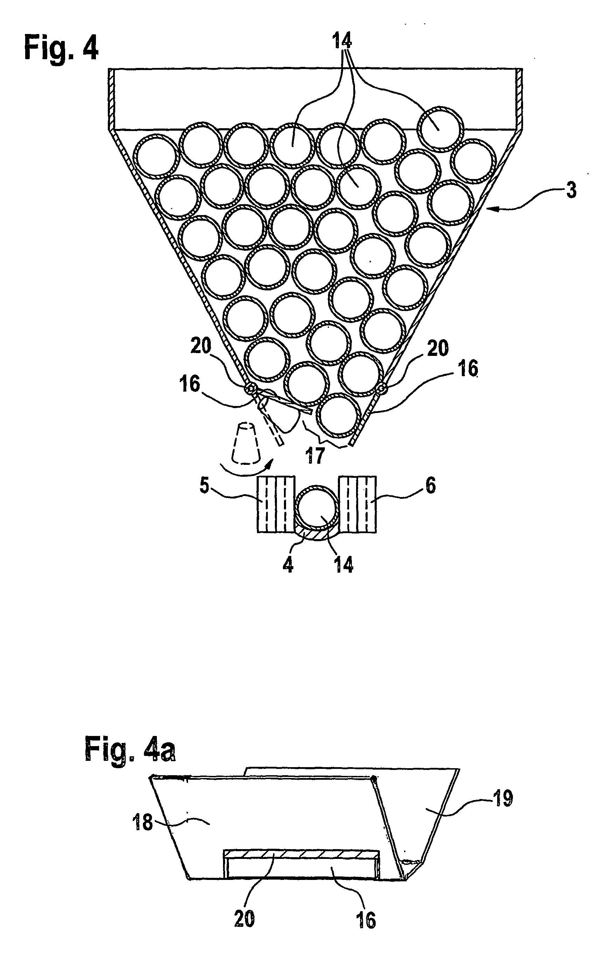

Die Zufuhrbahn 4 verläuft zwischen einer Austrittsöffnung 17 (s. Fig. 3 und 4) des Magazins 3 und dem freien Ende desjenigen Füllrohrs 11 bzw. 12, das sich in seiner Übernahmeposition befindet, in der eine Raupe 14 auf das Füllrohr aufgezogen wird. Unter dem freien Ende des Füllrohrs ist das Ende zu verstehen, das die Abfüllöffnung aufweist. Die Zufuhrbahn 4 ist zweckmäßigerweise ein offener Rohrabschnitt oder eine Rinne und ist aus Platzgründen bogenförmig gekrümmt, um eine möglichst kompakte Bauweise zu verwirklichen. Die Rinne hat einen Querschnitt, der, abweichend vom Rohrquerschnitt, nicht kreisförmig ist. Die Transporteinrichtungen für die Raupe 14 umfassen umlaufende erste und zweite Transportbänder 5 und 6, die zu beiden Seiten der Austrittsöffnung 17 des Magazins 3 und dem Anfang der Zufuhrbahn 4 angeordnet sind. Die endlos umlaufenden ersten und zweiten Transportbänder 5 und 6 sind in Kontakt mit der in der Zufuhrbahn 4 befindlichen Raupe und befördern diese in Richtung Füllrohr 11. Im Bereich der bogenförmigen Krümmung der Zufuhrbahn 4 sind zu beiden Seiten der Zufuhrbahn 4 Umlenkrollen 9 angebracht, die eine sichere Umlenkung der Raupe 14 im Bereich des Bogens der Zufuhrbahn 4 gewährleisten. Des weiteren sind endlos umlaufende dritte und vierte Transportbänder 8 und 9 vorgesehen, die zu beiden Seiten der Zufuhrbahn 4 vor dem freien Ende des Füllrohrs 11 angeordnet sind. Die dritten und vierten Transportbänder schieben die Raupe auf das Füllrohr 11 auf.

Figuren 3 und 4 zeigen schematische Schnittansichten des Magazins 3, das von trichterförmiger Gestalt ist. Das Magazin 3 wird von zwei konisch zusammenlaufenden Seitenwänden 18, 19 begrenzt, die in eine längliche spaltförmige Austrittsöffnung 17 münden. Die Seitenwände 18, 19 sind rechteckförmig und mit nicht dargestellter Rück- und Vorderwand verbunden. Die Vorder- und Rückwand ist jeweils dreieckförmig. Innerhalb des Magazins kann eine verstellbare Zwischenwand vorhanden sein, die im Magazin einen bestimmen Speicherraum abtrennen kann, um unterschiedliche Längen der Raupen 14 zu berücksichtigen. Das Magazin 3 ist weitgehend mit Raupen 14 gefüllt, die parallel zu der Austrittsöffnung 17 übereinander geschichtet sind. Die Maße der Austrittsöffnung 17 sind so dimensioniert, dass nur eine einzelne Raupe 14 die Austrittsöffnung 17 passieren kann. Im Stillstand der automatisierten Einzelraupenzufuhr tritt unter dem Einfluss der Schwerkraft eine gegenseitige Sperrwirkung der beiden untersten Raupen 14 auf, wie aus Fig. 3 ersichtlich ist, so dass in diesem Zustand die Austrittsöffnung 17 von einer Raupe 14 nicht passiert werden kann. In der einen Seitenwand 18 des Magazins 3 ist eine Längsklappe 16 angebracht, die schwenkbar an der Seitenwand 18 angelenkt ist und den Abschlussteil der Seitenwand 18 bildet.

Hierzu ist ein Drehgelenk 20 vorgesehen, um das die Längsklappe 16 in das Innere des Magazins 3 geschwenkt werden kann, wie dies in Fig. 4 gezeigt ist. Die Längs- oder Sperrldappen 16 dosieren den Austritt der Raupen 14 durch die Austrittsöffnung. Die Anordnung der Längsklappe 16 in der Seitenwand 18 ist im Detail in Fig. 4a dargestellt. Die Längsklappe 16 kann sich, wie in Fig. 4a gezeigt, nur über eine Teillänge der Seitenwand 18 erstrecken, jedoch ist es ebenso möglich, dass sich die Längsldappe 16 über die Gesamtlänge der Seitenwand 18 ausdehnt. In Fig. 3 ist des weiteren eine Raupe 14 in der Zufuhrbahn 4 dargestellt, die mittels des ersten und zweiten Transportbandes 5, 6 in Richtung Füllmaschine 1 transportiert wird.

Wie aus Fig. 4 ersichtlich ist, befindet sich außerhalb des Magazins 3 nahe der Längsklappe 16 ein Kipphebel 15. Der Kipphebel 15 wird, sobald er ein entsprechendes Steuersignal von der Steuereinrichtung 22 erhält, in Richtung des Pfeils gegen die Längsklappe 16 geschwenkt und drückt diese in das Innere des Magazins 3. Dadurch wird die an die Seitenwand 18 anliegende Raupe 14 durch die Längsldappe angehoben, so dass die gegenseitige Sperre der nebeneinander liegenden untersten Raupen aufgehoben wird und die auf der Innenseite der Seitenwand 19 anliegende Raupe 14 durch die Austrittsöffnung 17 hindurchtreten kann und so in die Zuführbahn 4 gelangt, um dort mit Hilfe der endlos umlaufenden Transportbänder 5 Und 6 in Richtung Füllmaschine 1 transportiert zu werden. Selbstverständlich kann eine Längsklappe auch schwenkbar an der anderen Seitenwand 19 angebracht sein, und dementsprechend ein Kipphebel 16 nahe dieser Längsklappe vorgesehen werden. Ebenso ist es möglich, jede der beiden Seitenwände 18 und 19 mit einer derartigen Längsklappe 16 auszurüsten und zu beiden Seiten der Längsklappen jeweils einen entsprechenden Kipphebel 15 anzuordnen. In den Figuren 3 und 4 ist jeweils nur der Kipphebel 15 nahe der Seitenwand 18 gezeigt und aus Gründen der besseren Übersichtlichkeit nur das Drehgelenk 20 in der Seitenwand 19 dargestellt, nicht jedoch der Kipphebel nächst dieser Seitenwand 19.

Die Breite der Austrittsöffnung 17 kann durch rahmenartige Einsätze, die nahe der Austrittsöffnung 17 an den Innenseiten der Seitenwände 18, 19 anliegen, auf die Durchmesser der Raupen 14 eingestellt werden.

Das Magazin mit einer oder zwei Längsklappen in einer oder beiden Seitenwänden und einem oder zwei Kipphebeln ist mechanisch wenig aufwändig gestaltet und arbeitet weitgehend störungsfrei über lange Betriebszeiten.

Die Steuereinrichtung 22, die sowohl an die Füllmaschine 1 als auch an die Verschließeinrichtung 2 angeschlossen ist, liefert sämtliche Steuersignale bzw. Signale zum Einstellen der Parameter an die einzelnen Baueinheiten der Befüllvorrichtung. Dazu gehören Steuersignale zum Aufziehen einer Raupe 14 auf das Füllrohr 11 bzw. 12, zum Schwenken des Füllrohrs 11 bzw. 12 in seine Abfüllposition, zum Befüllen der Raupe 14, zum Schwenken des Füllrohrs mit des gefüllten Raupenabschnitts in eine Abtransportstellung. Des weiteren liefert die Steuereinheit ein Signal zum Verschwenken der Drehplatte 10, so dass ein weiteres Füllrohr in eine Stellung zum Aufziehen einer Raupe gelangt, ferner Signale zum abschnittsweisen Verschließen der gefüllten Raupe 14 durch Clips oder Verschlussklammer, zur Freigabe einer Raupe 14 aus dem Magazin 3, in dem der Kipphebel oder die Kipphebel 15 verschwenkt werden, um die Längsklappen 16 in das Innere des Magazins 3 zu verschwenken. Sollte das Magazin 3 keine Raupen 14 mehr enthalten, so wird durch einen nicht gezeigten Tastschalter im Magazin 3 die Füllmaschine und die Verschließeinrichtung stillgesetzt. Erst nach dem Auffüllen des Magazins 3 mit Raupen 14 werden die Füllmaschine und die Verschließeinrichtung wieder eingeschaltet. Die Füllpumpe der Füllmaschine 1 wird abgeschaltet, sobald die auf dem Füllrhohr aufgezogene Raupe 14 gefüllt ist und der Endabschnitt der Raupe 14 von dem Füllrohr entfernt werden muss. Sobald ein Füllrohr mit eine frisch aufgezogenen Raupe 14 in die Befüllstellung eingeschwenkt ist, wird die Füllpumpe wieder in Gang gesetzt.

## Patentansprüche

1. Vorrichtung zum Befüllen von Verpackungshüllen mit einem Füllgut und anschließenden abschnittsweisen Verschließen der Verpackungshüllen, mit einer Füllmaschine (1), die auf einer Drehplatte (10) mindestens ein schwenkbares Füllrohr (11; 12) aufweist, auf das eine zu einer Raupe (14) geraffte Verpackungshülle aufziehbar ist, einer Verschließeinrichtung (2) zum abschnittsweisen Verschließen der befüllten Verpackungshülle und mit einem Magazin (3), in dem geraffte Verpackungshüllen gespeichert sind, **dadurch gekennzeichnet, dass** eine Steuereinrichtung (22) nach Bedarf die Entnahme einer einzelnen eigenstabilen/formstabilen Raupe (14) aus dem Magazin (3) steuert und dass Transporteinrichtungen (5, 6, 7, 8), Umlenkrollen (9) und eine bogenförmig gekrümmte Zufuhrbahn (4) für den Transport der Raupe (14) von dem Magazin (3) zu dem in einer Übernahmeposition befindlichen Füllrohr (11; 12) der Füllmaschine vorhanden sind,

2. Vorrichtung nach Anspruch 1, **dadurch gekennzeichnet, dass** das Magazin (3) trichterförmige Gestalt mit konisch zusammenlaufenden Seitenwänden (18, 19) aufweist und dass die Seitenwände (18, 19) in eine längliche spaltförmige Austrittsöffnung (17) münden,

3. Vorrichtung nach Anspruch 2, **dadurch gekennzeichnet, dass** die Maße der Austrittsöffnung (17) so dimensioniert sind, dass nur eine einzelne Raupe (14) die Austrittsöffnung (17) passieren kann.

4. Vorrichtung nach Anspruch 2, **dadurch gekennzeichnet, dass** eine oder beide Seitenwände des Magazins (3) je eine Längsklappe (16) aufweisen, die schwenkbar an den Seitenwänden (18, 19) angelenkt sind und den Abschlussteil der Seitenwände (18, 19) bilden.

5. Vorrichtung nach einem der Ansprüche 1 bis 4, **dadurch gekennzeichnet, dass** je ein Kipphebel (15) außerhalb des Magazins (3) nahe jeder Längsklappe (16) angeordnet ist, der in seiner Kippstellung die Längsklappe (16) in das Innere des Magazins (3) verschwenkt.

6. Vorrichtung nach einem der Ansprüche 1 bis 4, **dadurch gekennzeichnet, dass** ein Kipphebel (15) außerhalb des Magazins (3) nahe der einen Seitenwand (18) oder der anderen Seitenwand (19) angeordnet ist, der in seiner Kippstellung die Längsklappe (16) der einen Seitenwand (18) oder der anderen Seitenwand (19) in das Innere des Magazins (3) verschwenkt.

7. Vorrichtung nach den Ansprüchen 1 und 5, **dadurch gekennzeichnet, dass** jeder Kipphebel (15) mit der Steuereinrichtung (22) verbunden ist und von dieser ein Steuersignal zum Verschwenken der Längsklappe (16) empfängt, so bald ein Sensor (24) das Raupenende der auf einem Füllrohr (11; 12) aufgezogenen Raupe (14) detektiert,

8. Vorrichtung nach einem der Ansprüche 1 bis 5, **dadurch gekennzeichnet, dass** die Zufuhrbahn (4) zwischen der Austrittsöffnung (17) des Magazins (3) und dem freien Ende desjenigen Füllrohrs (11; 12) verläuft, das sich in seiner Übernahmeposition befindet, in der eine Raupe (14) auf das Füllrohr (11; 12) aufgezogen wird.

9. Vorrichtung nach Anspruch 8, **dadurch gekennzeichnet, dass** die Zufuhrbahn (4) ein offener Rohrabschnitt oder eine Rinne ist,

10. Vorrichtung nach den Ansprüchen 1 und 2, **dadurch gekennzeichnet, dass** die Transporteinrichtungen endlos umlaufende erste und zweite Transportbänder (5, 6) umfassen, die zu beiden Seiten der Austrittsöffnung (17) des Magazins (3) und dem Anfang der Zufuhrbahn (4) angeordnet sind und in Kontakt mit einer in der Zufuhrbahn (4) befindlichen Raupe (14) sind, um diese in Richtung Füllrohr (11; 12) zu befördern.

11. Vorrichtung nach Anspruch 1, **dadurch gekennzeichnet, dass** im Bereich der bogenförmigen Krümmung der Zufuhrbahn (4) Umlenkrollen (9) zu beiden Seiten der Zufuhrbahn (4) angebracht sind.

12. Vorrichtung nach Anspruch 10, **dadurch gekennzeichnet, dass** die Transporteinrichtungen endlos umlaufende dritte und vierte Transportbänder (8, 9) umfassen, die zu beiden Seiten der Zulaufbahn (4) vor dem freien Ende des Füllrohrs (11; 12) angeordnet sind.

13. Vorrichtung nach einem der Ansprüche 1 bis 12, **dadurch gekennzeichnet, dass** die Steuereinrichtung (22) sowohl an die Füllmaschine (1) als auch an die Verschließeinrichtung (2) angeschlossen ist und Steuersignale zum Aufziehen einer Raupe (14) auf ein zweites Füllrohr (11; 12), zum Schwenken eines ersten Füllrohrs (11; 12) in seine Abfüllposition, zum Befüllen der Raupe (14) durch das erste Füllrohr, zum Abtransport der gefüllten Abschnitte der Raupe 14 von dem ersten Füllrohr, zum abschnittsweisen Verschließen der gefüllten Raupe (14) und zur Freigabe einer Raupe (14) aus dem Magazin (3) an die Füllmaschine, die Verschließeinrichtung und an einen oder an zwei Kipphebel überträgt,

## Claims

1. An apparatus for filling packaging casings with a stuffing and subsequently closing the packaging casings section by section, having a filling machine (1) which, on a rotary plate (10), has at least one pivotable filling tube (11; 12) onto which can be drawn a packaging casing which has been shirred to form a strand (14), having a closing device (2) for closing the filled packaging casing section by section, and having a magazine (3) in which shirred packaging casings are stored, wherein a control device (22) controls the removal of an individual inherently stable/dimensionally stable strand (14) from the magazine (3) as and when required, and wherein transporting devices (5, 6, 7, 8), deflecting rollers (9) and an arcuately curved feed path (4) are present for transporting the strand (14) from the magazine (3) to the filling-machine filling tube (11; 12) located in a receiving position.

2. The apparatus as claimed in claim 1, wherein the magazine (3) is of hopper-like configuration with conically tapering side walls (18, 19), and wherein the side walls (18, 19) open out into an elongate gap-like outlet opening (17).

3. The apparatus as claimed in claim 2, wherein the outlet opening (17) is dimensioned such that only a single strand (14) can pass through the outlet opening (17).

4. The apparatus as claimed in claim 2, wherein one or both side walls of the magazine (3) has/have a respective longitudinal shutter (16), and the latter are articulated in a pivotable manner on the side walls (18, 19) and form the shut-off part of the side walls (18, 19).

5. The apparatus as claimed in one of claims 1 to 4, wherein in each case one tilting lever (15) is arranged outside the magazine (3), in the vicinity of each longitudinal shutter (16), and, in its tilting position, pivots the longitudinal shutter (16) into the interior of the magazine (3).

6. The apparatus as claimed in one of claims 1 to 4, wherein a tilting lever (15) is arranged outside the magazine (3), in the vicinity of the one side wall (18) or of the other side wall (19), and, in its tilting position, pivots the longitudinal shutter (16) of the one side wall (18) or of the other side wall (19) into the interior of the magazine (3).

7. The apparatus as claimed in claims 1 and 5, wherein each tilting lever (15) is connected to the control device (22) and receives, from the latter, a control signal for pivoting the longitudinal shutter (16) as soon as a sensor (24) detects the end of the strand (14) which has been drawn onto a filling tube (11; 12).

8. The apparatus as claimed in one of claims 1 to 5, wherein the feed path (4) runs between the outlet opening (17) of the magazine (3) and the free end of that filling tube (11; 12) which is located in its receiving position, in which a strand (14) is drawn onto the filling tube (11; 12).

9. The apparatus as claimed in claim 8, wherein the feed path (4) is an open tube section or a channel.

10. The apparatus as claimed in claims 1 and 2, wherein the transporting devices comprise endlessly circulating first and second transporting belts (5, 6) which are arranged on both sides of the outlet opening (17) of the magazine (3) at the start of the feed path (4) and are in contact with a strand (14) located in the feed path (4) in order to convey said strand in the direction of the filling tube (11; 12).

11. The apparatus as claimed in claim 1, wherein deflecting rollers (9) are fitted on both sides of the feed path (4) in the region of the arcuated curvature of the feed path (4).

12. The apparatus as claimed in claim 10, wherein the transporting devices comprise endlessly circulating third and fourth transporting belts (8, 9) which are arranged on both sides of the feed path (4) upstream of the free end of the filling tube (11; 12).

13. The apparatus as claimed in one of claims 1 to 12, wherein the control device (22) is connected both to the filling machine (1) and to the closing device (2) and transmits, to the filling machine, the closing device and to one or to two tilting levers, control signals in respect of drawing a strand (14) onto a second filling tube (11; 12), in respect of pivoting a first filling tube (11; 12) into its filling position, in respect of filling the strand (14) by way of the first filling tube, in respect of transporting the filled sections of the strand (14) away from the first filling tube, in respect of closing the filled strand (14) section by section and in respect of releasing a strand (14) from the magazine (3).

## Revendications

1. Dispositif pour remplir des enveloppes d'emballage avec un produit de remplissage et refermer ensuite par sections les enveloppes d'emballage, avec une machine de remplissage (1) qui présente, sur une plaque tournante (10), au moins un tube de remplissage pivotant (11 ; 12), sur lequel peut être appliquée l'enveloppe d'emballage contractée en forme de chenille (14), un dispositif de fermeture (2) pour refermer par sections l'enveloppe d'emballage remplie et un magasin (3), dans lequel sont stockées des enveloppes d'emballage contractées, **caractérisé en ce qu'**un dispositif de commande (22) commande, selon les besoins, le retrait d'une chenille (14) individuelle à stabilité propre ou à stabilité de forme du magasin (3) et **en ce que** sont prévus des dispositifs de transport (5, 6, 7, 8), des rouleaux de renvoi (9) et une voie d'alimentation (4) incurvée en forme d'arc pour le transport de la chenille (14) du magasin (3) au tube de remplissage (11 ; 12) se trouvant en position de réception.

2. Dispositif selon la revendication 1, **caractérisé en ce que** le magasin (3) présente une conception en forme d'entonnoir avec des parois latérales (18,19) convergeant en cône et **en ce que** les parois latérales (18, 19) débouchent dans un orifice de sortie (17) longitudinal en forme de fente.

3. Dispositif selon la revendication 2, **caractérisé en ce que** la mesure de l'orifice de sortie (17) est dimensionnée de sorte qu'une seule chenille (14) puisse passer dans l'orifice de sortie (17).

4. Dispositif selon la revendication 2, **caractérisé en ce qu'**une ou deux parois latérales du magasin (3) présente(nt), respectivement, un volet longitudinal (16), qui est articulé de manière à pouvoir pivoter sur les parois latérales (18, 19) et qui forme la partie finale des parois latérales (18, 19).

5. Dispositif selon l'une quelconque des revendications 1 à 4, **caractérisé en ce que** l'on aménage respectivement un culbuteur (15) en dehors du magasin (3) à proximité de chaque volet longitudinal (16), ledit culbuteur faisant pivoter dans sa position de basculement le volet longitudinal (16) à l'intérieur du magasin (3).

6. Dispositif selon l'une quelconque des revendications 1 à 4, **caractérisé en ce que** l'on aménage un culbuteur (15) en dehors du magasin (3) à proximité de l'une (18) des parois latérales ou de l'autre paroi latérale (19) qui, dans sa position de basculement, fait pivoter le volet longitudinal (16) de la paroi latérale (18) ou de l'autre paroi latérale (19) à l'intérieur du magasin (3).

7. Dispositif selon l'une quelconque des revendications 1 et 5, **caractérisé en ce que** chaque culbuteur (15) est raccordé au dispositif de commande (22) et reçoit de celui-ci un signal de commande pour faire pivoter le volet longitudinal (16) dès qu'un capteur (24) détecte l'extrémité de la chenille (14) tendue sur un tube de remplissage (11 ; 12).

8. Dispositif selon l'une quelconque des revendications 1 à 5, **caractérisé en ce que** la voie d'alimentation (4) s'étend entre l'orifice de sortie (17) du magasin (3) et l'extrémité libre du tube de remplissage (11 ; 12), qui se trouve dans sa position de réception, dans laquelle une chenille (14) est appliquée sur le tube de remplissage (11 ; 12).

9. Dispositif selon la revendication 8, **caractérisé en ce que** la voie d'alimentation (4) est une section tubulaire ouverte ou une rainure.

10. Dispositif selon les revendications 1 et 2, **caractérisé en ce que** les dispositifs de transport comprennent des première et deuxième bandes transporteuses sans fin (5, 6), qui sont aménagées de part et d'autre de l'orifice de sortie (17) du magasin (3) et au début de la voie d'alimentation (4) et qui sont en contact avec une chenille (14) se trouvant dans la voie d'alimentation (4) pour la transporter dans la direction du tube de remplissage (11 ; 12).

11. Dispositif selon la revendication 1, **caractérisé en ce que**, dans la zone de la courbure en forme d'arc de la voie d'alimentation (4), des rouleaux de renvoi (9) sont montés de part et d'autre de la voie d'alimentation (4).

12. Dispositif selon la revendication 10, **caractérisé en ce que** les dispositifs de transport comprennent des troisième et quatrième bandes transporteuses sans fin (8, 9) qui sont aménagées de part et d'autre de la voie d'alimentation (4) devant l'extrémité libre du tube de remplissage (11 ; 12).

13. Dispositif selon l'une quelconque des revendications 1 à 12, **caractérisé en ce que** le dispositif de commande (22) est raccordé tant à la machine de remplissage (1) qu'au dispositif de fermeture (2) et transmet des signaux de commande pour appliquer une chenille (14) sur un second tube de remplissage (11 ; 12), pour faire pivoter un premier tube de remplissage (11 ; 12) dans sa position de remplissage, pour remplir la chenille (14) via le premier tube de remplissage, pour transporter les sections remplies de la chenille 14 du premier tube de remplissage, pour refermer par sections la chenille remplie (14) et pour délivrer une chenille (14) du magasin (3) à la machine de remplissage, au dispositif de fermeture et à un ou deux culbuteurs.
